# EUROPEAN PATENT SPECIFICATION

(11) **EP 2 738 100 B1**
(45) Date of publication and mention of the grant of the patent: **13.03.2019**
(21) Application number: 13193525.6
(22) Date of filing: 19.11.2013
(51) Int. Cl.: B64D 45/00

(54) **Aircraft with safety analysis zone**
Flugzeug mit Sicherheitsanalysezone
Aéronef avec zone d'analyse de sécurité

(30) Priority: 29.11.2012 US 201213688866
(43) Date of publication of application: 04.06.2014
(73) Proprietor: Goodrich Corporation, Charlotte, NC 28217-4578 (US)
(72) Inventor: Cahill, Eric Daniel, Troy, OH Ohio 45373 (US)
(74) Representative: Dehns

(56) References cited:
- US-A- 5 531 402
- US-A1- 2011 265 575
- US-B2- 7 688 199

## Description

### BACKGROUND OF THE INVENTION

The present invention relates to aircrafts, and more particularly to a safety analysis zone of an aircraft, as well as a method of reducing hazards of an aircraft zone.

Aircraft manufacturers often divide the aircraft into zones for a variety of reasons, such as to support airworthiness regulations, the design process and to plan and facilitate maintenance. The zones may be further divided into subzones. The zones and subzones generally relate to physical barriers in the aircraft, but physical barriers are not necessary for definition of a zone or subzone. Aircraft zones differ in usage, pressurization, temperature range, exposure to severe weather and lightning strikes, and the hazards contained therein, such as ignition sources, flammable fluids, flammable vapors, or rotating machines, for example. Accordingly, installation requirements for wiring depend on the particular zone in which the wiring is situated, based on the various hazards that may be encountered in the zone.

Zonal safety analysis (ZSA) is an industry method of ensuring that equipment installations within each zone of an aircraft meet adequate safety standards with respect to design and installation standards, interference between systems, and maintenance errors. ZSA is particularly important in areas of the aircraft where multiple systems and components are installed in close proximity. ZSA in these regions ensures that any failure or malfunction which by itself is considered sustainable, but which could have more serious effects the failure/malfunction adversely affects other adjacent systems or components. Currently, the analysis and burden to analyze closely disposed components in particular zones is high. As noted above, wiring is one component of concern and great efforts are made to ensure sufficient shielding, isolation, and co-location, etc.

US 5531402 A discloses a prior art safety analysis zone.

US 7688199 B2 discloses a prior art flight control system.

US 2011/265575 A1 discloses a prior art condition estimation system.

### BRIEF DESCRIPTION OF THE INVENTION

According to the invention, there is provided a safety analysis zone of an aircraft as set forth in claim 1.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1 is a perspective view of an aircraft;
FIG. 2 is a schematic illustration of a safety analysis zone of the aircraft monitored and controlled by a wired arrangement and a wireless system; and
FIG. 3 is a flow diagram illustrating a method of reducing safety analysis of an aircraft zone.

### DETAILED DESCRIPTION OF THE INVENTION

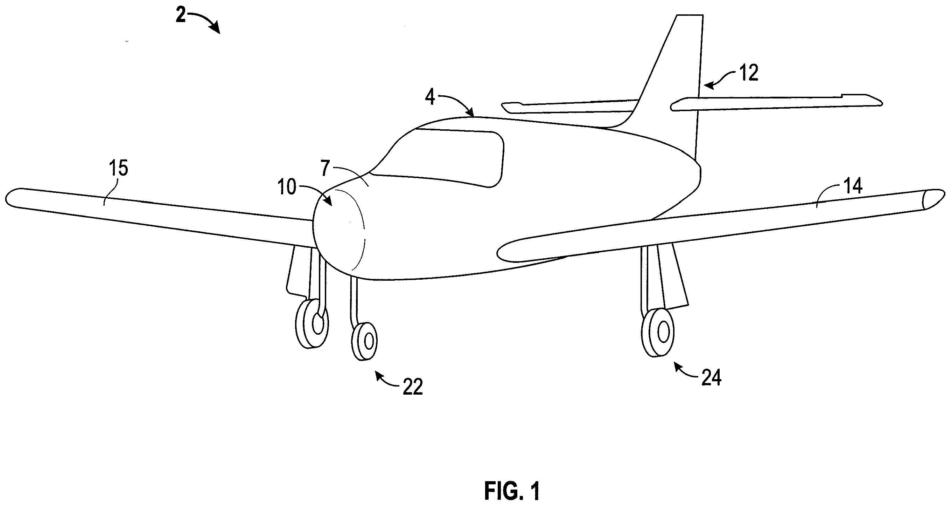

Referring to FIG. 1, a vehicle in accordance with an exemplary embodiment is indicated generally with reference numeral 2. The vehicle 2 is shown in the form of an aircraft 4. Although illustrated as an aircraft, it is to be understood that the vehicle 2 may take on other forms. The aircraft 4 includes a fuselage 7 including a nose section 10 and a tail section 12. The aircraft 4 also includes a first wing 14 extending from a first side of the fuselage 7 and a second wing 15 extending from an opposite side of the fuselage 7. The aircraft 4 is shown to include a nose gear, referred to herein as a forward landing gear 22 arranged near the nose section 10 as well as a main gear, referred to herein as an aft landing gear 24 mounted to the first wing 14.

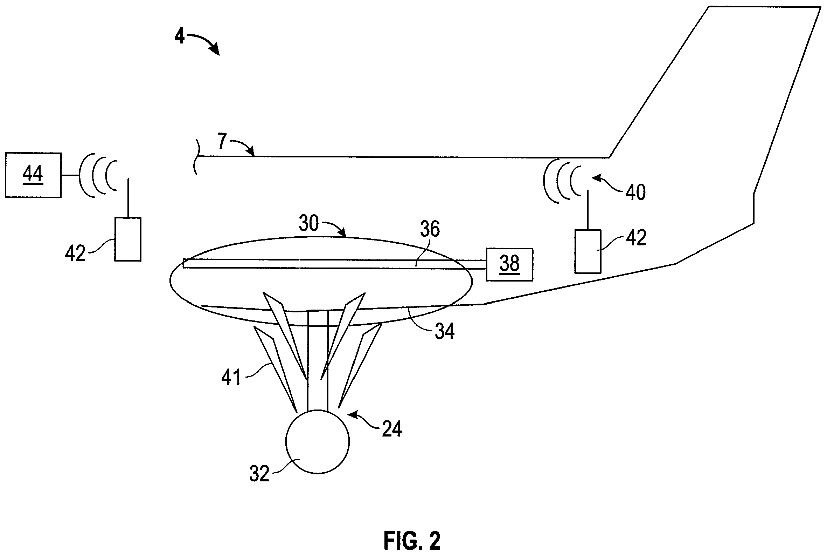

Referring now to FIG. 2, a portion of the aircraft 4 is schematically illustrated. The aircraft 4 includes a plurality of safety analysis zones (not labeled) which are analyzed for design and safety considerations, for example. Each safety analysis zone includes a plurality of systems, subsystems and components that each must be analyzed individually and in combination with surrounding systems, subsystems and components. In the illustrated embodiment, a tire zone 30 is included that comprises at least one tire 32 of the aft landing gear 24, as well as a portion 34 of the fuselage 7. Proximate the portion 34 of the fuselage 7 is a wired arrangement 36 that includes at least one, but typically a bundle of wires that are in operable communication with an aircraft system, subsystem and/or component. There are numerous aircraft systems, subsystems or components that the wired arrangement 36 may be in operable communication with. The wired arrangement 36 may be employed to monitor and control a hydraulic system 38. The hydraulic system 38 is merely an exemplary system that the wired arrangement 36 is configured to monitor and control and it is to be understood that several alternative systems or components may be monitored and controlled by the wired arrangement 36. Such alternative systems or components may include portions of the first wing 14 or the second wing 15, for example, but it can be appreciated by those skilled in the art that numerous others would be contemplated.

To avoid an unsafe operating condition of the aircraft 4 in the event that a hazardous condition is imposed on the wired arrangement 36, the aircraft 4 also includes a wireless system 40 configured to monitor and control the system or component that would otherwise be monitored and controlled by the wired arrangement 36, which in the example above would be hydraulic system 38. In the embodiment described above and illustrated, the wired arrangement 36 is located in the tire zone 30, which may also be referred to as a tire burst zone where fragments 41 of the tire 32 may project during a tire burst event. Rather than include a primary monitoring and control arrangement and a redundant monitoring and control arrangement in close proximity to each other in a region that may be negatively impacted by a tire burst event, the primary and redundant monitoring and control arrangements are remotely located from each other. Specifically the primary monitoring and control arrangement comprises the wired arrangement 36 and the redundant monitoring and control arrangement comprises the wireless system 40. In an alternative embodiment falling outside the scope of the claims, the primary monitoring and control arrangement comprises the wireless system 40, while the redundant monitoring and control arrangement comprises the wired arrangement 36. In yet another embodiment falling outside the scope of the claims, both the wired arrangement 36 and the wireless system 40 may be operating simultaneously to monitor and control the system or component, such as the hydraulic system 38 noted as an example above. In still yet another embodiment falling outside the scope of the claims it is contemplated that both the primary monitoring and control arrangement and the redundant monitoring and control arrangement comprise wireless systems.

The wireless system 40 typically comprises electrical and/or electronic components for obtaining, sending and receiving information wirelessly. The wireless system 40 includes one or more sensors, actuators and processors, for determining whether the wired arrangement 36 is in a satisfactory operating condition, as well as for obtaining information about the system or component to be monitored and controlled. Additionally, a plurality of transceivers 42 are configured to wirelessly relay information to each other and to send commands to an actuator for controlling the system or component, such as the hydraulic system 38, for example. The wireless system 40 includes a remote data concentrator (RDC) 44 configured to acquire analog and discrete signals and provide data to other avionic systems on a digital bus. The RDC may be programmed to handle many variations of inputs and can be adapted to receive various types of signals and data. In combination, the components of the wireless system 40 are configured to function as the primary or redundant monitoring and control arrangement for one or more systems or components as an alternative to the wired arrangement 36.

In addition to the tire zone 30 described in detail above, the wired arrangement 36 may be located in or pass through various other zones, such as a rotor zone, which refers to areas proximate an engine rotor. Such an area may include systems or components that are susceptible to rotor burst, which comprises fragments of the rotor projecting toward and potentially into other components. Tire burst and rotor burst are merely two potential hazardous conditions that may be included in zonal analysis for design and safety considerations. Additional hazardous conditions that must be factored into such analyses include fires, fluid leaks, lightning strikes and high intensity radio frequency, to name a few. Each of the hazardous conditions may negatively impact the wired arrangement 36. Advantageously, the wireless system 40 provides an alternative monitoring and control arrangement to the wired arrangement 36 in the event of such a hazardous condition, thereby reducing analysis efforts associated with ensuring zonal safety of wired configurations. As noted above, it is contemplated that the wireless system 40 may be employed as the primary monitoring and control arrangement and is not limited to operation in cases of such hazardous conditions.

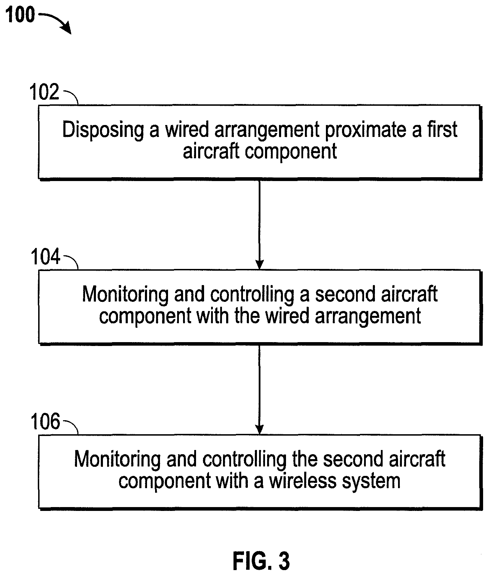

A method of reducing hazards of an aircraft zone 100 is also provided as illustrated in FIG. 3 and with reference to FIGS. 1 and 2. The aircraft 4 and the wired arrangement 36, as well as the wireless system 40, have been previously described and specific structural components need not be described in further detail. The method of reducing hazards of an aircraft zone 100 includes disposing a wired arrangement proximate a first aircraft component in 102. In 104, a second aircraft component is monitored and controlled with the wired arrangement and is also monitored and controlled by a wireless system in 106.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A safety analysis zone (30) for an aircraft (4), said zone (30) comprising:
a first aircraft component (32);
a wired arrangement (36) disposed proximate the first aircraft component (32) and comprising a primary monitoring and control arrangement for monitoring and controlling a second aircraft component (38); and
a wireless system (40) for monitoring and controlling the second aircraft component (38), the wireless system (40) comprising a redundant monitoring and control arrangement for use upon the imposition of a hazardous condition on the wired arrangement (36);
one or more sensors and processors configured to determine whether the wired arrangement (36) is in a satisfactory operating condition, as well as to obtain information about the second aircraft component (38); and
a plurality of transceivers (42), at least one of which is disposed proximate the wired arrangement (36), configured to relay information wirelessly to each other and to send commands to an actuator for controlling the second aircraft component (38).

2. The safety analysis zone (30) of claim 1, wherein the first aircraft component comprises a rotor.

3. The safety analysis zone (30) of claim 1, wherein the first aircraft component comprises a tire (32).

4. The safety analysis zone (30) of any of claims 1 to 3, wherein the hazardous condition comprises a tire burst.

5. The safety analysis zone (30) of any of claims 1 to 3, wherein the hazardous condition comprises a rotor burst.

6. The safety analysis zone (30) of any of claims 1 to 3, wherein the hazardous condition comprises a fire.

7. The safety analysis zone (30) of any of claims 1 to 3, wherein the hazardous condition comprises a fluid leak.

8. The safety analysis zone (30) of any of claims 1 to 3, wherein the hazardous condition comprises a lightning strike.

9. The safety analysis zone (30) of any of claims 1 to 3, wherein the hazardous condition comprises a high intensity radio frequency.

10. The safety analysis zone (30) of any preceding claim, wherein the second aircraft component comprises a hydraulic system line (38).

11. The safety analysis zone (30) of any preceding claim, wherein the wireless system (40) comprises a plurality of electrical and/or electronic components disposed proximate the wired arrangement (36).

12. The safety analysis zone (30) of any preceding claim, wherein the wireless system (40) comprises a remote data concentrator (44).

## Patentansprüche

1. Sicherheitsanalysezone (30) für ein Flugzeug (4), wobei die Zone (30) Folgendes umfasst:
eine erste Flugzeugkomponente (32);
eine kabelgebundene Anordnung (36), die in der Nähe der ersten Flugzeugkomponente (32) angeordnet ist und eine primäre Überwachungs- und Steueranordnung zum Überwachen und Steuern einer zweiten Flugzeugkomponente (38) umfasst; und
ein drahtloses System (40) zum Überwachen und Steuern der zweiten Flugzeugkomponente (38), wobei das drahtlose System (40) eine redundante Überwachungs- und Steueranordnung zur Verwendung bei der Auferlegung eines gefährlichen Zustands auf die kabelgebundene Anordnung (36) umfasst;
einen oder mehrere Sensoren und Prozessoren, die dazu konfiguriert sind, sowohl zu bestimmen, ob die kabelgebundene Anordnung (36) in einem zufriedenstellenden Betriebszustand ist, als auch Informationen über die zweite Flugzeugkomponente (38) zu erhalten; und
eine Vielzahl von Transceivern (42), von denen mindestens einer in der Nähe der kabelgebundenen Anordnung (36) angeordnet ist und die dazu konfiguriert sind, Informationen drahtlos aneinander weiterzuleiten und Befehle an einen Aktuator zum Steuern der zweiten Flugzeugkomponente (38) zu senden.

2. Sicherheitsanalysezone (30) nach Anspruch 1, wobei die erste Flugzeugkomponente einen Rotor umfasst.

3. Sicherheitsanalysezone (30) nach Anspruch 1, wobei die erste Flugzeugkomponente einen Reifen (32) umfasst.

4. Sicherheitsanalysezone (30) nach einem der Ansprüche 1 bis 3, wobei der gefährliche Zustand ein Platzen eines Reifens umfasst.

5. Sicherheitsanalysezone (30) nach einem der Ansprüche 1 bis 3, wobei der gefährliche Zustand eine Rotorexplosion umfasst.

6. Sicherheitsanalysezone (30) nach einem der Ansprüche 1 bis 3, wobei der gefährliche Zustand ein Feuer umfasst.

7. Sicherheitsanalysezone (30) nach einem der Ansprüche 1 bis 3, wobei der gefährliche Zustand eine Fluidleckage umfasst.

8. Sicherheitsanalysezone (30) nach einem der Ansprüche 1 bis 3, wobei der gefährliche Zustand einen Blitzeinschlag umfasst.

9. Sicherheitsanalysezone (30) nach einem der Ansprüche 1 bis 3, wobei der gefährliche Zustand eine hochintensive Funkfrequenz umfasst.

10. Sicherheitsanalysezone (30) nach einem der vorhergehenden Ansprüche, wobei die zweite Flugzeugkomponente eine Hydrauliksystemleitung (38) umfasst.

11. Sicherheitsanalysezone (30) nach einem der vorhergehenden Ansprüche, wobei das drahtlose System (40) eine Vielzahl von elektrischen und/oder elektronischen Komponenten umfasst, die in der Nähe der kabelgebundenen Anordnung (36) angeordnet sind.

12. Sicherheitsanalysezone (30) nach einem der vorhergehenden Ansprüche, wobei das drahtlose System (40) einen entfernten Datenkonzentrator (44) umfasst.

## Revendications

1. Zone d'analyse de sécurité (30) pour un aéronef (4), ladite zone (30) comprenant :
un premier composant d'aéronef (32) ;
un agencement câblé (36) disposé à proximité du premier composant d'aéronef (32) et comprenant un agencement primaire de surveillance et de commande pour surveiller et commander un second composant d'aéronef (38) ; et
un système sans fil (40) pour surveiller et commander le second composant d'aéronef (38), le système sans fil (40) comprenant un agencement de surveillance et de commande à redondance pour une utilisation suite à l'imposition d'une situation dangereuse à l'agencement câblé (36) ;
un ou plusieurs capteur(s) configuré(s) pour déterminer si l'agencement câblé (36) est dans un état de fonctionnement satisfaisant, ainsi que pour obtenir des informations concernant le second composant d'aéronef (38) ; et
une pluralité d'émetteurs/récepteurs (42), dont au moins un est disposé à proximité de l'agencement câblé (36), configurés pour relayer des informations sans fil l'un à l'autre et pour transmettre des commandes à un actionneur pour commander le second composant d'aéronef (38).

2. Zone d'analyse de sécurité (30) selon la revendication 1, dans laquelle le premier composant d'aéronef comprend un rotor.

3. Zone d'analyse de sécurité (30) selon la revendication 1, dans laquelle le premier composant d'aéronef comprend un pneumatique (32).

4. Zone d'analyse de sécurité (30) selon l'une quelconque des revendications 1 à 3, dans laquelle la situation dangereuse comprend une crevaison de pneumatique.

5. Zone d'analyse de sécurité (30) selon l'une quelconque des revendications 1 à 3, dans laquelle la situation dangereuse comprend une panne de rotor.

6. Zone d'analyse de sécurité (30) selon l'une quelconque des revendications 1 à 3, dans laquelle la situation dangereuse comprend un incendie.

7. Zone d'analyse de sécurité (30) selon l'une quelconque des revendications 1 à 3, dans laquelle la situation dangereuse comprend une fuite de fluide.

8. Zone d'analyse de sécurité (30) selon l'une quelconque des revendications 1 à 3, dans laquelle la situation dangereuse comprend un coup de foudre.

9. Zone d'analyse de sécurité (30) selon l'une quelconque des revendications 1 à 3, dans laquelle la situation dangereuse comprend une fréquence radio haute intensité.

10. Zone d'analyse de sécurité (30) selon une quelconque revendication précédente, dans laquelle le second composant d'aéronef comprend une ligne de système hydraulique (38).

11. Zone d'analyse de sécurité (30) selon une quelconque revendication précédente, dans laquelle le système sans fil (40) comprend une pluralité de composants électriques et/ou électroniques disposés à proximité de l'agencement câblé (36).

12. Zone d'analyse de sécurité (30) selon une quelconque revendication précédente, dans laquelle le système sans fil (40) comprend un concentrateur de données à distance (44).
